# EUROPEAN PATENT SPECIFICATION

(11) **EP 0 384 220 B1**
(45) Date of publication and mention of the grant of the patent: **21.09.1994**
(21) Application number: 90102399.4
(22) Date of filing: 07.02.1990
(51) Int. Cl.: G21C 3/356

(54) **Nuclear fuel-rod support grid**
Kernbrennstab-Abstandshalter
Grille d'espacement de support pour aiguilles de combustibles nucléaires

(30) Priority: 21.02.1989 US 312288
(43) Date of publication of application: 29.08.1990
(73) Proprietor: WESTINGHOUSE ELECTRIC CORPORATION, Pittsburgh Pennsylvania 15222 (US)
(72) Inventor: DeMario, Edmund Emroy, Columbia, SC 29205 (US)
(74) Representative: Gallo, Wolfgang, Dipl.-Ing. (FH)

(56) References cited:
- EP-A- 0 273 183
- EP-A- 0 291 736
- PATENT ABSTRACTS OF JAPAN, vol. 13, no. 112 (P-844)[3460], 17th March 1989;& JP-A-63 289 485 (MITSUBISHI) 25-11-1988

## Description

The present invention relates generally to nuclear fuel assemblies and, more particularly, to a nuclear fuel rod support grid for use therein.

In most nuclear reactors, the reactor core comprises a large number of elongate fuel assemblies each of which includes a plurality of fuel rods held in an organized array by means of a plurality of grids spaced axially along the fuel assembly and attached to elongate control-rod guide thimbles which extend slightly beyond the upper and lower ends of the fuel rods and have top and bottom nozzles secured to their opposite ends. The grids, as well known in the art, are utilized to laterally support the fuel rods and to maintain them precisely spaced from each other, to prevent rod vibration, and, to some extent, to frictionally retain the rods against longitudinal movement. In U.S. Patent 4,492, 844 assigned to the assignee of the present invention, there is disclosed a grid composed of a multiplicity of inner and outer straps interleaved so as to form an egg-crate-like structure configuration defining a multitude of cells for individually receiving fuel rods and control-rod guide thimbles. In the cells there are relatively resilient springs and/or relatively rigid protrusions (called dimples) formed out of the metal of the interleaved straps and projecting therefrom toward the centers of the respective cells for enough to frictionally engage the respective fuel rods when extending therethrough. The ends of the inner straps are connected to the outer grid straps which extend peripherally around the grid and are connected for each other so as to impart strength and rigidity to the whole grid.

The fuel-rod engaging springs of this conventional grid design have a vertical orientation, i.e., they extend parallel to the longitudinal axes of the grid cells. Therefore, and since the springs must have a certain length in order to have the desired resiliency the grid shapes are of substantial height, thereby increasing both the amount of parasitic structural material utilized i the fuel assembly, and the pressure drop of coolant flowing through the latter.

For an endeavor to reduce the pressure drop of cooling liquid through a grid, U.s. Patent No. 4,756,878 proposes to convexly contour the upstream edges of the grid straps and to taper their downstream edges. More particularly, it proposes to streamline the upstream grid strap edges by giving them semicylindrical or semiellipsoidal shape through beveling (coining) and etching, abrading electron or laser beam melting, in the like.

It is the principal object of the invention to provide an improved grid design which will reduce pressure drop still further.

The invention accordingly resides in a nuclear fuel-rod support grid as characterized in the appended main claim or any of the claims subordinate thereto.

Experimentation revealed that complete chamfering of both the upstream and the downstream edges of the fuel-rod engaging members, such as dimple and spring structures, in a fuel-rod support grid will result in a significant reduction of pressure drop. More specifically, it was found that double-sided chamfers placed on both longitudinal edges of the outer portions of the dimple structures reduced the pressure drop by as much as up to ten percent, and placing chamfers on both longitudinal edges of the spring structures resulted in a pressure-drop reduction of about the same magnitude. Chamfering of both opposite edges was also found to produce better flow characteristics across the dimple structures.

A preferred embodiment of the invention will now be described, by way of example only, with reference to the accompanying drawing, in which:-
Figure 1 is an elevational view, partly in section, of a fuel assembly which employs support grids embodying the invention, the assembly being illustrated in vertically foreshortened form and with parts broken away for clarity;
Fig. 2 is an enlarged top plan view of one of the support grids of the fuel assembly shown in Fig. 1.;
Fig. 3 is an enlarged fragmentary side elevational view of an inner strap of the grid shown in Fig. 2;
Fig. 4 is an enlarged fragmentary horizontal sectional view taken along line 4-4 of Fig. 3;
Fig. 5 is an enlarged fragmentary horizontal sectional view taken along line 5-5 of Fig. 3;
Fig. 6 is an enlarged fragmentary vertical sectional view taken along line 6-6 of Fig. 4;
Fig. 7 is an enlarged fragmentary vertical sectional view taken along line 7-7 of Fig. 4;
Fig. 8 is an enlarged fragmentary portion of the side elevational view in Fig. 3, showing the configuration of a spring structure before it is bent into its final shape;
Fig. 9 is a sectional view taken along line 9-9 of Fig. 8, showing the configuration of the spring structure after the spring structure is bent into its final shape;
Fig. 10 is an enlarged cross-sectional view taken along line 10-10 of Fig. 8; and
Figs. 11 and 12 are enlarged fragmentary sectional views taken along lines 11-11 and 12-12, respectively, of Fig. 8.

In the following description, like reference characters designate like or corresponding parts throughout the several views of the drawings, and such terms as "forwards", "rearward", "left", "right", "upwardly", "downwardly", and the like are used as words of convenience not to be construed as limiting terms.

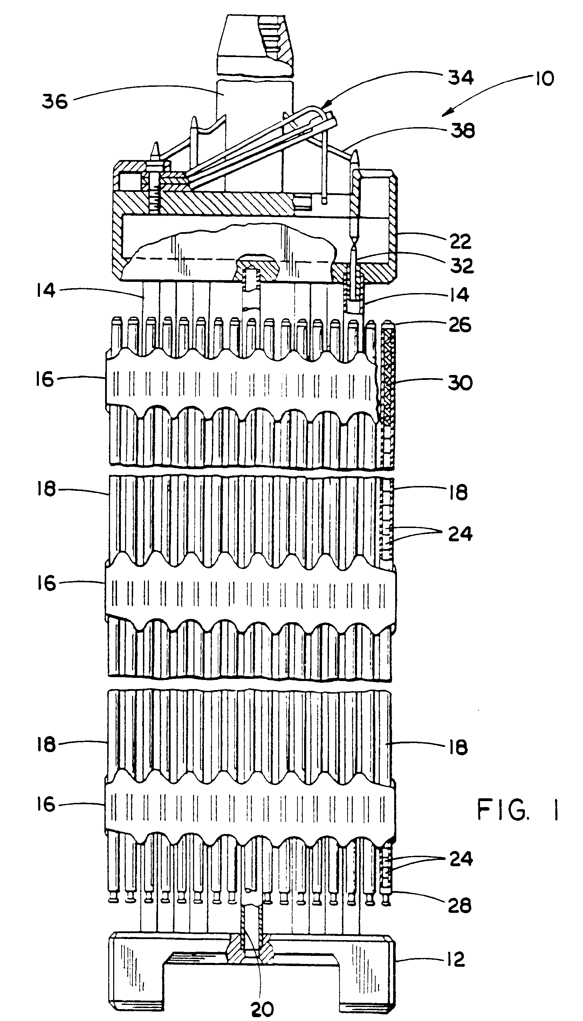

Referring now to the drawings, and particularly to Fig. 1, the fuel assembly illustrated therein and generally designated with the numeral 10 is the type used in pressurized water reactors (PWR). Basically, it comprises a lower end structure or bottom nozzle 12 for supporting the assembly on the lower core plate (not shown) in the core region of a reactor (not shown); a number of guide tubes or thimbles 14 which project longitudinally upward from the bottom nozzle 12; a plurality of transverse grids 16 axially spaced along and supported by the guide thimbles 14; a plurality of elongate fuel rods 18 transversely spaced and supported in an organized array by the grids 16; an instrumentation tube 20 located in the center of the fuel assembly; and an upper end structure or top nozzle 22 attached to the upper ends of the guide thimbles 14. Each fuel rod 18 comprises nuclear fuel pellets 24 made of fissile material, and has it opposite ends hermetically sealed by means of end plugs 26, 28. Commonly, a plenum spring 30 is disposed between the upper end plug 26 and the pellets 24, in order to maintain the pellets firmly stacked. During operation of the reactor, a liquid moderator/coolant, such as water or water containing boron, is pumped upward through the fuel assemblies of the core in order to extract heat generated therein for the purpose of producing useful work.

The top nozzle 22 has associated therewith a rod cluster control mechanism 34 including an internally threaded cylindrical member 36 with radially extending flukes or arms 38 which are connected to control rods 32 moveable in the guide thimbles 14. The control mechanism 34 is operable to move the control rods 32 axially in the guide thimbles 14 so as to control the fission process in the fuel assembly 10, all as well known in the art.

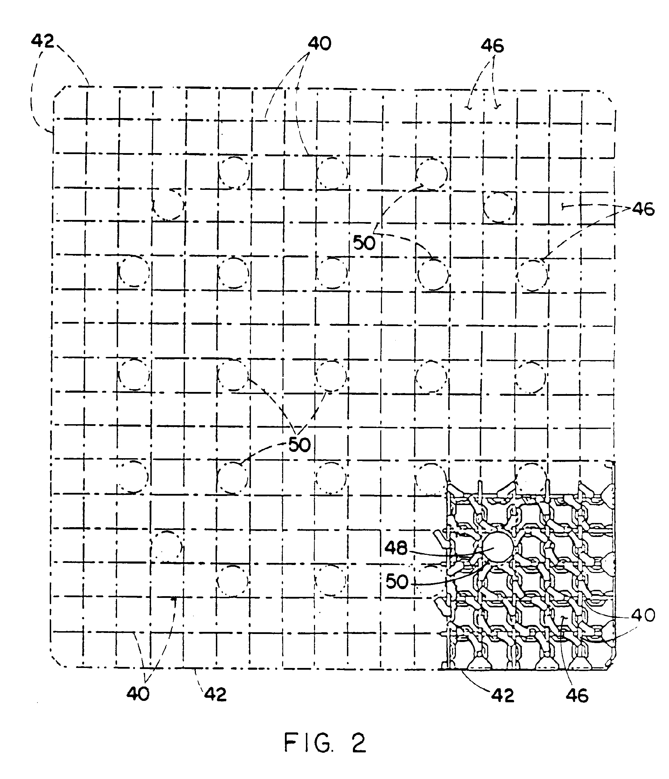

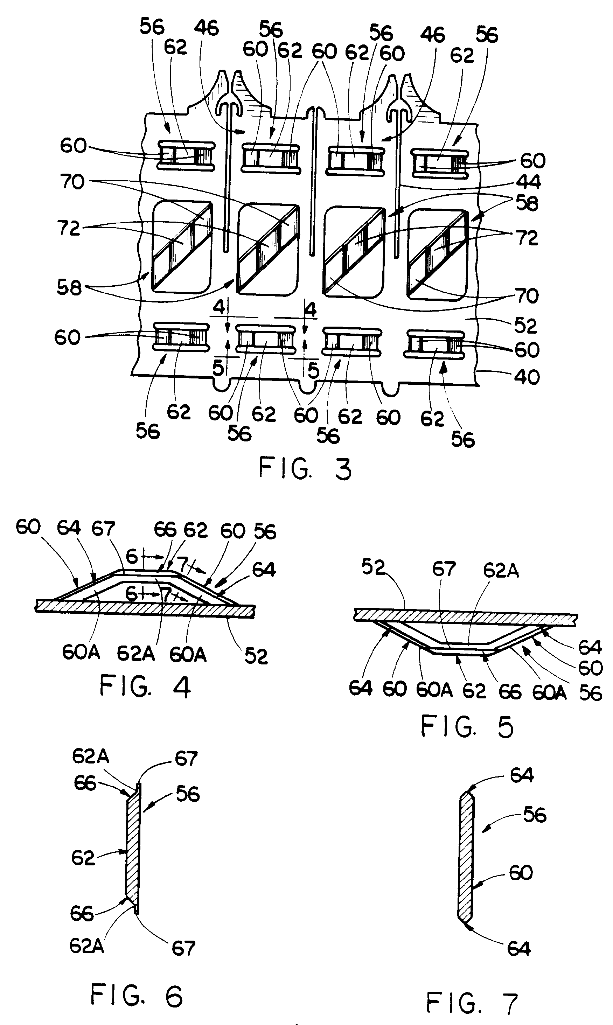

Referring now to Figs. 2 and 3 showing a fuel-rod support grid 16 embodying the invention, the grid 16 consists of a plurality of inner and outer straps 40, 42 having formed therein slots 44 by means of which the straps are interleaved with one another in an egg-crate-like manner so as to form a matrix of hollow and open-end cells 46 and a plurality of opening 48. The cells 46 are designed to receive therethrough respective ones of the fuel rods 18, whereas the openings 48 have inserted therein sleeves 50 which are attached to the respective inner straps 40 and employed to effect the grid 16 to the guide thimbles 14.

Each cell 46 for receiving a fuel rod 18 has its longitudinal axis A generally parallel to the strap sections forming the cell walls and to the direction of coolant flow through the cell. Each cell-defining wall section 54 of the outer straps 42 has a pair of transversely (horizontally) extending and vertically (axially) spaced fuel-rod engaging members in the form of dimple structures (not shown) formed integral therewith and projecting into the adjacent cell 46. Each cell-defining wall section 52 of the inner straps 40 is common to two adjacent cells adjoining each other, and it has formed integral therewith a pair of transversely (horizontally) extending and vertically (axially) spaced fuel-rod engaging members in the form of dimple structures 56, and a transversely extending fuel-rod engaging member in the form of a diagonal spring structure 58 disposed between the dimple structures 56. The dimple structures 56 protrude from the associated wall section 52 into the adjacent cell 46 to one side thereof, and the spring structure 58 protrudes from the same wall section 52 into the adjacent cell to the opposite side thereof. Thus, each cell 46 of the grid 16 has associated therewith six rod engaging members, i.e., four dimple structures 56 and two spring structures 58, so that a fuel rod 18 extending through the cell is contacted at six circumferentially and axially displaced locations thereon.

Referring to Figs. 4-7, the dimple structures 56 are composed of a resiliently yieldable flexible material, such as stainless steel or zircaloy metal, each of them being formed, e.g. stamped and coined, out of the corresponding wall section 52 of the respective inner strap. Each dimple structure 56 comprises a pair of spaced-apart opposite leg or outer portions 60 and a middle portion 62 therebetween. The outer portions 60 of each dimple structure 56 are integral at their outer ends with the respective wall section 52, and they extend in opposite inclined relation with respect to the wall section 52 away from the latter and toward and in alignment with one another. The middle portion 62 of each dimple structure 56 is integral at its outer ends with the inner ends of the respective outer portions 62. Due to the particular orientation of the dimple structure 56, both its outer portions 60 and its middle portion 62 extend generally transverse with respect to the coolant-flow direction through the cell 46.

The outer portions 60 and the middle portion 62 of each dimple structure 56 have pairs of opposite edges 60A and 62A; respectively, extending lengthwise thereof and merging with one another. In accordance with the invention, each outer-portion edge 60A has a preferably doubles-sided chamfer 64, and the middle portion edge 62A has a preferably single- or one-sided chamfer 66, the one-sided chamfer 66 being longer than the double-sided chamfer 64, for instance about 2 times longer. The outer and middle portions 60, 62 are of generally planar configuration, and each side of the respective chamfers 64, 66 is at an angle within the range of 45 +/- 5 degrees with respect to the planes of the respective outer and middle portions. Each edge 62A of the middle portion 62 also has a rim 67 extending along and outward from each of its one-sided chamfers 66.

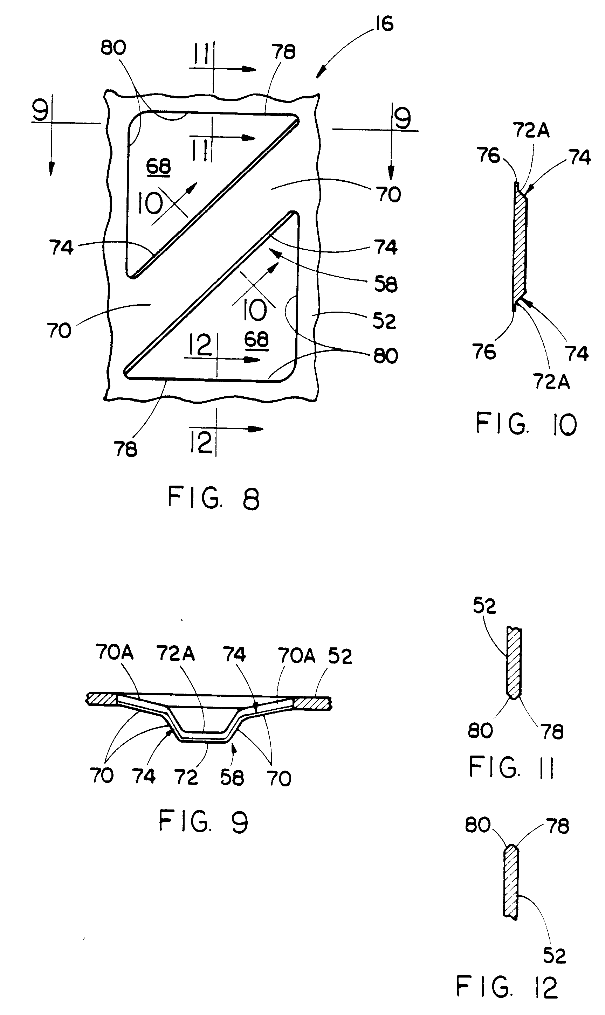

As seen from Figs. 8-12, the fuel-rod engaging spring structures 58 are also composed of resiliently yieldable flexible material, such as stainless steel or zircaloy metal, each spring structure 48 being formed, e.g., stamped and coined, from the corresponding wall section 52 of the respective inner strap 40 in association with one of the cells 46 of the grid 16. Each inner grid strap wall section 52 has formed therein two cutouts defining windows 68 at opposite sides of its spring structure 48, the latter extending generally diagonal between the windows 68 and being integrally connected to diagonally opposite upper and lower portions of the associated wall section 52.

Basically, each diagonal spring structure 58 is integrally composed of two opposite outer portions 70 and a middle or inner portion 72 therebetween. The spaced-apart outer portions 70 of each spring structure 48 are integrally, at their respective outer ends, with upper and lower portions of the associated wall section 42, and they extend in alignment with one another generally diagonal, preferably at forty-five degrees, with respect to the central longitudinal axis A of, and thus for the coolant flow direction through, the associated grid cell 46. The inner portion 72 of each spring structure 48 is integral at its opposite outer ends with the inner ends of the respective outer portions 70 and likewise extends generally diagonal with respect to the direction of coolant flow through the associated cell 46.

The outer portions 70 and the middle portion 72 of each spring structure 48 have pairs of opposite edges 70A and 72A extending lengthwise thereof and merging into one another. Each of the outer-portion edges 70A and middle-portion edges 72A has a chamfer 74, preferably a single- or one-sided chamfer substantially identical to the one-sided chamfers 66, 74 of the dimple structures 56. The outer and middle portions 70, 72 of each spring structure 48 are generally planar configuration, with the side of each chamfer 74 set at an angle within the range of 45 +/- 5 degrees relative to the plane of the respective outer or middle portion. Each edge 70A, 72A of the outer and middle portions 70, 72 also has a rim 76 formed thereon along and outwardly of the one-sided chamfer 74.

Double-sided chamfers 78 are also provided on the edges 80 of the windows 68. Referring to Figs. 4-7, it can be clearly seen therefrom that the sides defining each of the chamfers 64 and 66 on the respective longitudinal or lengthwise edges of the dimple structures 56 extend in inclined relation to, and solely between, planes containing opposite faces, substantially parallel with the direction of coolant flow through the cells 46, of the portions of the spring structures having the chamfered edges thereon.

## Claims

1. A nuclear fuel-rod support grid (16) composed of inner and outer straps (40, 42) interleaved with one another to form a matrix of open-end cells (46) each for receiving a fuel rod (18) and defined by pairs of oppositely disposed wall sections (52) of the inner straps, each said wall section (52) being common to two adjacent cells (46) and having at least one fuel-rod engaging member (56, 58) of resiliently yieldable material formed thereon and extending in a direction generally transverse to the direction of coolant flow through the associated cell (46), each fuel-rod engaging member (56, 58) comprising a pair of spaced-apart opposite outer portions (60, 70) which have outer ends thereof connected to the associated wall section (52) and extend from the latter toward each other in oppositely inclined relation with respect thereto, and a middle portion (62, 72) which extends between and has its outer ends connected to the inner ends of the respective outer portions (60, 70), characterized in that each of said outer portions (60, 70) and said middle portion (62, 72) has opposite longitudinal edges (60A, 62A, 70A, 72A) each of which has formed thereon a chamfer (64, 66, 74) composed of at least one side which in inclined with respect to, and extends solely between, planes containing opposite faces of the respective outer or middle portion which are substantially parallel with said direction of coolant flow.

2. A nuclear fuel-rod support grid (16) according to claim 1, characterized in that each of said outer and middle portions (60, 62, 70, 72) is of substantially planar configuration.

3. A nuclear fuel-rod support grid (16) according to claim 1 or 2, characterized in that said or each side of each chamfer (64, 66, 74) is inclined at an angle within the range of 45 +/- 5 degrees with respect to said planes.

4. A nuclear fuel-rod support grid (16) according to claim 1, 2 or 3, characterized in that said middle portion (62, 72) has a rim (67, 76) extending along and outwardly from the chamfer (66, 74) on each longitudinal edge (62A, 72A) thereof.

5. A nuclear fuel-rod support grid (16) according to claim 1, 2, 3 or 4, characterized in that the chamfer (66, 74) on each longitudinal edge (62A, 72A) of said middle portion (62, 72) is a one-sided chamfer (66, 74).

6. A nuclear fuel-rod support grid (16) according to any one of claims 1 to 5, characterized in that said fuel-rod engaging member is a dimple structure (56) extending substantially perpendicular to said direction of coolant-flow, and the chamfer on each longitudinal edge (60) of each outer portion (60) of said dimple structure (56) is a double-sided chamfer (64).

7. A nuclear fuel-rod support grid (16) according to any one of claims 1 to 6, characterized in that said fuel-rod engaging member is a spring structure (58) extending substantially diagonal with respect to said direction of coolant-flow, and the chamfer on each longitudinal edge (70A) of each outer portion (70) of said spring structure (58) is a one-sided chamfer (74).

8. A nuclear fuel-rod support grid (16) according to claim 7, characterized in that each outer portion (70) of the spring structure (58) has a rim (76) extending along and outwardly from the chamfer (74) on each longitudinal edge (70A) thereof.

9. A nuclear fuel-rod support grid (16) according to claim 7 or 8, characterized in that each wall section (52) of said inner straps (40) has cut-out portions which define windows (68) along both longitudinal edges (70A, 72A) of said spring structure (58), said cut-outs having edges (80) each of which has a double-sided chamfer (78) formed thereon.

## Patentansprüche

1. Kernbrennstabhaltegitter (16), das aus inneren und äußeren Streifen (40, 42) zusammengesetzt ist, die zur Bildung einer Matrix von offenendigen Zellen (46) ineinandergreifend angeordnet sind, die jeweils einen Brennstab (18) aufnehmen und durch Paare von gegenüberliegenden Wandabschnitten (52) der inneren Streifen gebildet sind, wobei jeder Wandabschnitt (52) zwei benachbarten Zellen (46) gemeinsam zugeordnet ist und mindestens ein brennstabergreifendes Element (56, 58) aus elastisch nachgiebigem Material aufweist, das daran gebildet ist und in einer Richtung etwa quer zur Richtung der Kühlmittelströmung durch die betreffende Zelle (46) verläuft, wobei jedes brennstabergreifende Element (56, 58) zwei beabstandete beiderseitige äußere Teile (60, 70), deren äußeren Enden mit dem betreffenden Wandabschnitt (52) verbunden sind und von dem letzteren in entgegengesetzt geneigter Orientierung relativ dazu verlaufen, und einen Mittelteil (62, 72) aufweist, der zwischen den äußeren Teilen (60, 70) verläuft und mit seinen äußeren Enden mit den inneren Enden der äußeren Teile verbunden ist, dadurch gekennzeichnet, daß jeder der äußeren Teile (60, 70) und der Mittelteil (62, 72) beiderseitige Längskanten (60A, 62A, 70A, 72A) aufweist, die jeweils mit einer Abschrägung (64, 66, 74) versehen sind, die an mindestens einer Seite gebildet ist und mit Bezug auf die beiderseitigen Flächen des betreffenden äußeren oder Mittelteils, die im wesentlichen parallel mit der Kühlmittelströmungsrichtung sind, geneigt sind und ausschließlich zwischen diesen verlaufen.

2. Kernbrennstabhaltegitter (16) nach Anspruch 1, dadurch gekennzeichnet, daß jeder Außen- bzw. Mittelteil (60, 62, 70, 72) eine im wesentlichen ebene Konfiguration hat.

3. Kernbrennstabhaltegitter (16) nach Anspruch 1 oder 2, dadurch gekennzeichnet, daß die bzw. jede Seite jeder Abschrägung (64, 66, 74) unter einem Winkel im Bereich von 45 ± 5° mit Bezug auf die genannten Ebenen geneigt ist.

4. Kernbrennstabhaltegitter (16) nach Anspruch 1, 2 oder 3, dadurch gekennzeichnet, daß der Mittelteil (62, 72) einen Rand (67, 76) aufweist, der entlang und außerhalb der Abschrägung (66, 74) auf jeder seiner Längskanten (62A, 72A) verläuft.

5. Kernbrennstabhaltegitter (16) nach Anspruch 1, 2, 3 oder 4, dadurch gekennzeichnet, daß die Abschrägung (66, 74) auf jeder Längskante (62A, 72A) des Mittelteils (62, 72) eine einseitige Abschrägung (66, 74) ist.

6. Kernbrennstabhaltegitter (16) nach einem der Ansprüche 1 bis 5, dadurch gekennzeichnet, daß das brennstabergreifende Element ein Noppenelement (56) ist, das im wesentlichen senkrecht zur Richtung der Kühlmittelströmung verläuft, und daß die Abschrägung auf jeder Längskante (60) jedes äußeren Teils (60) des Noppenelements (56) eine doppelseitige Abschrägung (64) ist.

7. Kernbrennstabhaltegitter (16) nach einem der Ansprüche 1 bis 6, dadurch gekennzeichnet, daß das brennstabergreifende Element ein Federelement (58) ist, das im wesentlichen diagonal mit Bezug auf die Richtung der Kühlmittelströmung verläuft, und daß die Abschrägung auf jeder Längskante (70A) jedes äußeren Teils (70) des Federelements (58) eine einseitige Abschrägung (74) ist.

8. Kernbrennstabhaltegitter (16) nach Anspruch 7, dadurch gekennzeichnet, daß jeder Außenteil (70) des Federelements (58) einen Rand (76) aufweist, der entlang und außerhalb der Abschrägung (74) an jeder seiner Längskanten (70A) verläuft.

9. Kernbrennstabhaltegitter (16) nach Anspruch 7 oder 8, dadurch gekennzeichnet, daß jeder Wandabschnitt (52) der inneren Streifen (40) ausgeschnittene Bereiche aufweist, die Fenster (68) entlang beider Längskanten (70A, 72A) des Federelements (58) bilden, und daß die Ausschnitte Kanten (80) mit jeweils daran gebildeten beidseitigen Abschrägungen (78) haben.

## Revendications

1. Grille de support (16) de barreaux de combustible nucléaire, composée de lames intérieures et extérieures (40,42) entrecroisées pour former une matrice de cellules (46) à extrémité ouverte dont chacune est destinée à recevoir un barreau de combustible (18) et qui sont délimitées par des paires de tronçons de paroi (52) des lames intérieures disposés en vis-à-vis, chaque tronçon de paroi (52) étant commun à deux cellules adjacentes (46) et comportant au moins un élément de retenue (56, 58) de barreau de combustible en matériau élastiquement déformable qui y est formé et qui s'étend dans une direction généralement transversale à la direction d'écoulement du caloporteur qui traverse la cellule associée (46), chaque élément (56, 58) de retenue du barreau de combustible comprenant une paire de parties extérieures (60, 70) opposées et espacées dont les extrémités extérieures sont raccordées au tronçon de paroi associé (52) et qui partent de ce dernier en direction l'une de l'autre en étant inclinées en sens opposé par rapport à celui-ci, et une partie intermédiaire (62, 72) qui s'étend entre les parties extérieures respectives (60, 70) en ayant ses extrémités extérieures raccordées aux extrémités intérieures des parties extérieures respectives,
caractérisée en ce que chacune desdites parties extérieures (60, 70) et de ladite partie intermédiaire (62, 72) comporte des bords longitudinaux opposés (60A, 62A, 70A, 72A) sur chacun desquels est formé un chanfrein (64, 66, 74) composé d'au moins une face qui est inclinée par rapport à des plans entre lesquels elle est totalement située, plans qui contiennent des faces opposées de la partie extérieure ou intermédiaire respective qui sont sensiblement parallèles à ladite direction d'écoulement du caloporteur.

2. Grille de support (16) de barreaux de combustible nucléaire selon la revendication 1, caractérisée en ce que chacune desdites parties extérieures et intermédiaires (60, 62, 70, 72) a une configuration sensiblement plane.

3. Grille de support (16) de barreaux de combustible nucléaire selon la revendication 1 ou 2, caractérisée en ce que ledit chanfrein, ou chacun desdits chanfreins (64, 66, 74), est incliné d'un angle compris entre 45±5 degrés par rapport auxdits plans.

4. Grille de support (16) de barreaux de combustible nucléaire selon la revendication 1, 2 ou 3, caractérisée en ce que ladite partie intermédiaire (62, 72) présente un rebord (67, 76), qui s'étend le long dudit chanfrein (66, 74) et à l'extérieur de celui-ci, sur chaque bord longitudinal (62A, 72A) de celle-ci.

5. Grille de support (16) de barreaux de combustible nucléaire selon la revendication 1, 2, 3 ou 4, caractérisée en ce que le chanfrein (66, 74) se trouvant sur chaque bord longitudinal (62A, 72A) de ladite partie intermédiaire (62, 72) est un chanfrein à une seule face (66, 74).

6. Grille de support (16) de barreaux de combustible nucléaire selon l'une quelconque des revendications 1 à 5, caractérisée en ce que ledit élément de retenue du barreau de combustible est une structure en bosse (56) qui s'étend sensiblement perpendiculairement à ladite direction d'écoulement du caloporteur, et le chanfrein se trouvant sur chaque bord longitudinal (60A) de chaque partie extérieure (60) de ladite structure en bosse (56) est un chanfrein à deux faces (64).

7. Grille de support (16) de barreaux de combustible nucléaire selon l'une quelconque des revendications 1 à 6, caractérisée en ce que ledit élément de retenue du barreau de combustible est une structure formant ressort (58) qui s'étend sensiblement diagonalement par rapport à ladite direction d'écoulement du caloporteur, et le chanfrein se trouvant sur chaque bord longitudinal (70A) de chaque partie extérieure (70) de ladite structure formant ressort (58) est un chanfrein à une face (74).

8. Grille de support (16) de barreaux de combustible nucléaire selon la revendication 7, caractérisée en ce que chaque partie extérieure (70) de la structure formant ressort (58) comporte un rebord (76), qui s'étend le long du chanfrein (74) et à l'extérieur de celui-ci, sur chaque bord longitudinal de celle-ci.

9. Grille de support (16) de barreaux de combustible nucléaire selon la revendication 7 ou 8, caractérisée en ce que chaque tronçon de paroi (52) desdites lames intérieures (40) présente des parties découpées qui définissent des fenêtres (68) le long des deux bords longitudinaux (70A, 72A) de ladite structure formant ressort (58), lesdites parties découpées ayant des bords (80) sur chacun desquels est formé un chanfrein à deux faces (78).
